# EUROPÄISCHE PATENTSCHRIFT

(11) **EP 1 432 964 B1**
(45) Veröffentlichungstag und Bekanntmachung des Hinweises auf die Patenterteilung: **23.05.2012**
(21) Anmeldenummer: 02774644.5
(22) Anmeldetag: 25.09.2002
(51) Int. Cl.: G01F 11/28, G01F 15/00

(54) **VERFAHREN UND VORRICHTUNG ZUR ZUFÜHRUNG DOSIERTER MENGEN EINES FEINKÖRNIGEN SCHÜTTGUTS**
METHOD AND DEVICE FOR CONVEYING DOSED QUANTITIES OF A FINE-GRAINED BULK MATERIAL
PROCEDE ET DISPOSITIF D'ALIMENTATION DE QUANTITES DOSEES D'UN MATERIAU EN VRAC A GRAINS FINS

(30) Priorität: 29.09.2001 CH 179201
(43) Veröffentlichungstag der Anmeldung: 30.06.2004
(73) Patentinhaber: Dvorak, Michael, 3602 Thun (CH); Birchler, Markus, 3600 Thun (CH)
(72) Erfinder: Dvorak, Michael, 3602 Thun (CH); Birchler, Markus, 3600 Thun (CH)
(74) Vertreter: Luchs, Willi
(86) Internationale Anmeldenummer: PCT/EP2002/010709
(87) Internationale Veröffentlichungsnummer: WO 2003/029762

(56) Entgegenhaltungen:
- EP-A- 0 502 564
- DE-A- 19 959 473
- GB-A- 2 184 709
- US-A- 4 211 518
- US-A- 4 462 760

## Beschreibung

Die Erfindung betrifft ein Verfahren zur Zuführung dosierter Mengen eines feinkörnigen Schüttguts in einen weiteren Arbeitsprozess gemäss dem Oberbegriff *des Anspruches 1.*

Ein Verfahren der eingangs genannten Art sind beispielsweise aus der DE-A-199 59 473 bekannt. Diese ermöglichen eine gepulste oder eine kontinuierliche Dosierung eines pulverförmigen Stoffes, die mittels mehrerer kleiner und genau abgestimmter Teildosierungen durchgeführt wird. Die Grösse der Teildosierungen ist durch die Grösse einer wechselweise füll-und entleerbaren Dosierkammer festgelegt. Für eine in einer bestimmten Zeiteinheit abzugegebende Gesamtmenge wird im voraus eine geeignete Anzahl und Grösse von Dosierkammern gewählt, wobei in der Riegel beispielsweise drei verschieden grosse Dosierkammern zur Auswahl stehen. Wird eine andere Dosiermenge gewünscht so müssen die Dosierkammern ausgewechselt werden.

Der vorliegenden Erfindung liegt die Aufgabe zugrunde, ein Verfahren zur Zuführung dosierter Mengen eines feinkörnigen Schüttguts vorzuschlagen, die eine einfachere und dennoch höchst präzise Dosierung unterschiedliche grossen Mengen eines feinkörnigen Schüttguts ermöglichen.

Bei einem Verfahren und einer Vorrichtung zum hydraulischen Fördern von Feststoff nach der Druckschrift DE-A-24 57 942 ist eine wechselweise Förderung vorgesehen, bei der in Abhängigkeit der Wichte des Feststoffes die Kammerlängen über Sperrorgan einstellbar sind. Damit lässt sich das Volumen der Fördermenge bestimmen, aber eine Förderung des reinen Feststoffes ohne Flüssigkeitszugabe ist damit nicht ermöglicht und auch nicht vorgesehen.

Eine Maschinenvorrichtung gemäss der Druckschrift GB-A-2 184 709 dient zum automatischen Abfüllen eines fliessfähigen Produktes, bei der eine Messkammer mit einem mit dem Trichter verbundenen Einlass und Auslass, der jeweils auf aufeinanderfolgende Aufnahmebehälter ausgerichtet wird. Innerhalb des Durchlasskanals ist zudem ein Auslassventil angeordnet, welches in geöffnetem Zustand zum Fördern der bestimmten Menge des fliessfähigen Produktes als Ganzes in den Aufnahmebehälter dient. Es sind aber nicht mehrere Dosierkammern für ein variable Dosierung des Schüttgutes vorgesehen.

Diese Aufgabe wird erfindungsgemäss durch ein Verfahren mit den Merkmalen des Anspruches 1 gelöst.

Dadurch, dass zur wahlweisen Festlegung der zuzuführenden Schüttgutmengen die gewünschte Frequenz des Füllens und Entleerens der Dosierkammern und/oder das Volumen der vorhandenen Dosierkammer in seiner Grösse eingestellt wird, können unte.rschiedlich grosse Schüttgutmengen in gewünschten Teildosierungen präzis in den weiteren Arbeitsprozess (z.B. Beschichtungsprozesse wie Kaltgasspritzen. Sandstrahlen etc.) zugeführt werden, ohne dass ein Auswechseln der Dosierkammern notwendig ist. Hieraus ergibt sich eine hochpräzise Förderung auch kleinster Dosiermengen, nebst dem dass der Verstellbereich der Mengen sehr gross ist.

Bevorzugte Weitergestaltungen der Erfindung bilden den Gegenstand abhängiger Ansprüche.

Die Erfindung wird nachfolgend anhand der Zeichnung näher erläutert. Es zeigen:
- Fig. 1: schematisch ein erstes Ausführungsbeispiel einer Vorrichtung zur Zuführung dosierter Mengen eines feinkörnigen Schüttguts in einen weiteren Arbeitsprozess; dieses Ausführungsbeispiel ist nicht Bestandteil der Erfindung.
- Fig. 2: ein Diagramm der öffnung- und Verschlusszeiten von aus Fig. 1 ersichtlichen Ventilen;
- Fig. 3: schematisch ein erfindungsgemäβes Ausführungsbeispiel einer Vorrichtung zur Zuführung dosierter Mengen eines feinkörnigen Schüttguts in einen weiteren Arbeitsprozess;
- Fig. 4: im Längsschnitt eine erste Ausführungsform-eines Ventils für eine Vorrichtung nach Fig. 1 oder 3;
- Fig. 5: im Längsschnitt eine zweite Ausfiihrungsform eines Ventils für eine Vorrichtung nach Fig. 1 oder 3;
- Fig. 6: eine erste Ausführungsform eines Dosierkörpers für eine Vorrichtung nach Fig. 1 oder 3 im Schnitt;
- Fig. 7: einen Schnitt nach Linie VII-VII in Fig. 6;
- Fig. 8: eine der Fig. 7 entsprechende Darstellung einer zweiten Ausführungsform eines Dosierkörpers für eine Vorrichtung nach Fig. 1 oder 3;
- Fig. 9: einen Schnitt nach Linie IX-IX in Fig. 8; und
- Fig. 10: einen Dosierkammer-Teil des Dosierkörpers nach Fig. 6 oder 9 im vergrösserten Massstab.

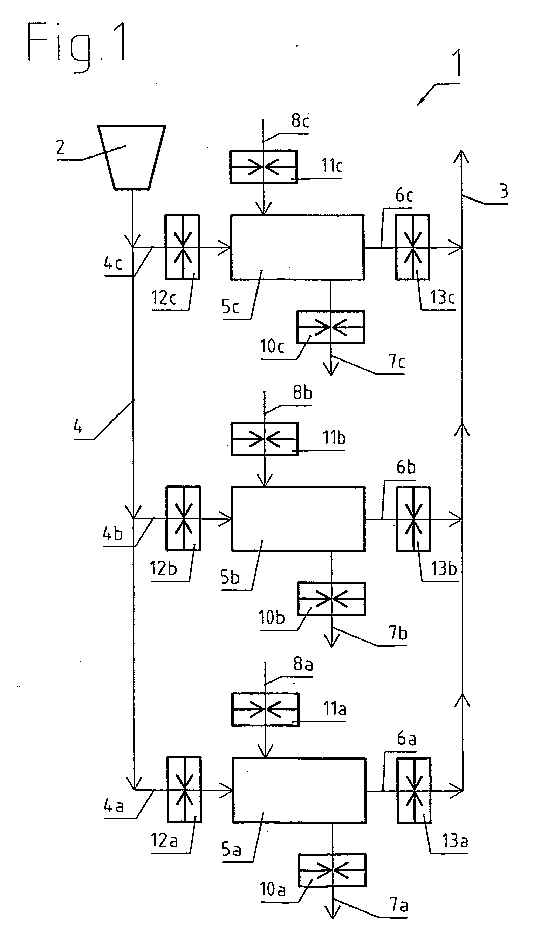

Fig.1 zeigt schematisch eine Vorrichtung 1 zur pneumatischen Zuführung dosierter Mengen eines feinkörnigen Schüttguts, beispielsweise eines Pulvers, aus einem Behälter 2 in einen weiteren Arbeitsprozess (mit Pfeil 3 angedeutet). Beim Behälter 2 kann es sich z.B. um ein Pulver-Silo handeln. Pulverförmige Stoffe können beispielsweise dosiert unter oder ohne Druck in einen Beschichtungsprozess, wie z.B. Kaltgasspritzen, elektrostatisches Beschichten, Rapid Prototyping, Plasma-Pulver-Auftragsschweissen, Rezepturen, wie bspw. Mischungen von Farbsalzen, oder in der Chemie, Medizin, Bäckereien etc., eingeleitet werden. Die dosierte Schüttgut-Zuführung könnte jedoch auch beispielsweise beim Sandstrahlen oder anderen Arbeitsprozessen Anwendung finden.

Das Schüttgut wird vom Behälter 2 über eine zentrale Zufuhrleitung 4 sowie über drei von diesem abzweigende Zufuhrleitungen 4a, 4b, 4c zu drei Dosierkammern 5a, 5b, 5c pneumatisch gefördert, und von diesen wiederum über je eine in eine zentrale Austragsleitung 6 mündende Austragsleitung 6a, 6b, 6c unter Druck weitergeführt. Für die pneumatische Förderung des Schüttguts ist jede Dosierkammer 5a bzw. 5b bzw. 5c wechselweise an eine Saug- bzw. Vakuumleitung 7a bzw. 7b bzw. 7c einerseits und an eine Druckgasleitung 8a bzw. 8b bzw. 8c anderseits anschliessbar, wobei beim Anschluss an die Saug- bzw. Vakuumleitung 7a bzw. 7b bzw. 7c das Schüttgut mit Unterdruck angesaugt und die Dosierkammer 5a bzw. 5b bzw. 5c gefüllt wird, und beim Anschluss an die Druckgasleitung 8a bzw. 8b bzw. 8c die Dosierkammer 5a bzw. 5b bzw. 5c entleert und das Schüttgut mit Überdruck oder einem Vakuum weitergeführt wird. Mittels aus Fig. 1 nicht ersichtlicher, gasdurchlässiger Filtermembranen wird dabei das Eindringen des Schüttguts in die Gasleitungen vermieden.

Zum Einschalten und Ausschalten des Anschlusses der jeweiligen Dosierkammer 5a, 5b, 5c an die Saugleitung 7a, 7b, 7c sind Ventile 10a, 10b, 10c vorhanden. Auch das Einschalten und Ausschalten des Anschlusses an die jeweilige Druckgasleitung 8a, 8b, 8c erfolgt über Ventile 11a, 11b, 11c.

Auch die Schüttgut-Zufuhrleitungen, 4a, 4b, 4c zu den einzelnen Dosierkammern 5a, 5b, 5c können jeweils mittels eines Ventils 12a, 12b, 12c geschlossen oder geöffnet gehalten werden. Zum Verschliessen und Öffnen der Austragsleitungen 6a, 6b, 6c sind Ventile 13a, 13b, 13c vorhanden.

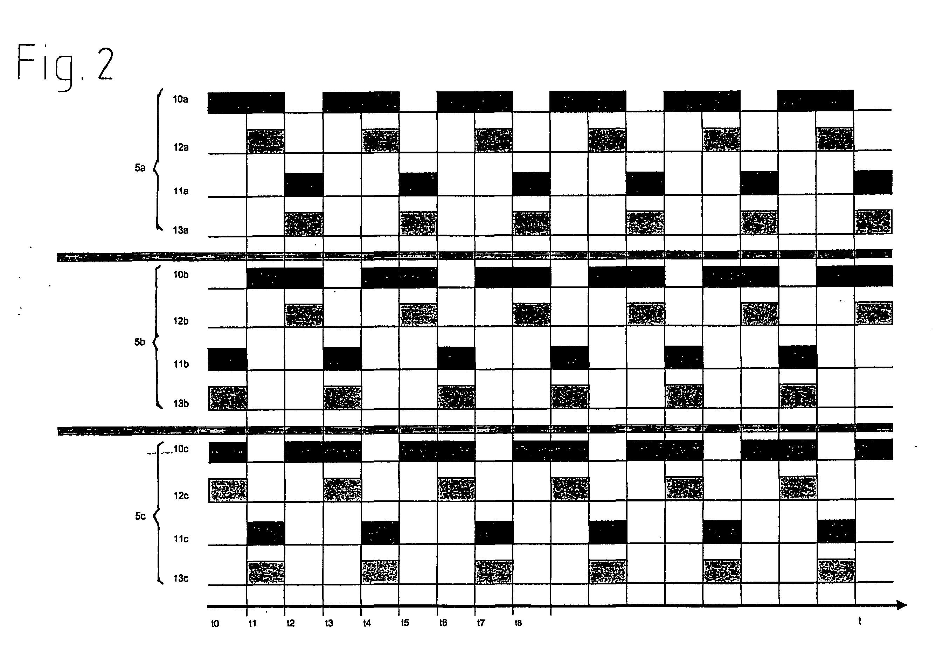

Die vorstehend erwähnten Ventile in den Schüttgut- und Gasleitungen zu den einzelnen Dosierkammern 5a, 5b, 5c werden mittels einer in der Zeichnung nicht dargestellten pneumatischen, elektromagnetischen, magnetischen oder hydraulischen Steuerung betätigt. Dabei kann durch einen geeigneten Steuerungsablauf des Öffnungs- und Schliessvorgänges der Ventile zu den einzelnen, parallel geschalteten Dosierkammern 5a, 5b, 5c, bei welchem die gleichwirkenden Ventile an einzelnen Dosierstellen mit zeitlicher Verschiebung nacheinanderfolgend betätigt werden, eine gepulste oder eine kontinuierliche, pulsfreie Zuführung des dosierten Schüttguts durchgeführt werden. Ein Beispiel eines möglichen zeitlichen Ablaufs des durch die Vorrichtung 1 nach Fig. 1 realisierbaren Dosier- bzw. Zufuhrvorganges ist dem in Fig. 2 dargestellten Diagramm zu entnehmen.

Gemäss Fig. 2 wird in einem Zeitpunkt to das der zur Dosierkammer 5a führenden Saugleitung 7a zugeordnete Ventil 10a geöffnet und in der Dosierkammer 5a Vakuum bzw. Unterdruck hergestellt. Danach wird in einem Zeitpunkt t₁ das der Zufuhrleitung 4a zugeordnete Ventil 12a geöffnet und das Schüttgut in die Dosierkammer 5a angesaugt. Zum gleichen Zeitpunkt t₁ wird bereits auch die zweite Dosierkammer 5b durch Öffnen des Ventils 10b evakuiert, um dann in einem Zeitpunkt t₂ durch Öffnen des Ventils 12b aus der Zufuhrleitung 4b gefüllt zu werden. In diesem Zeitpunkt t₂ wird die Pulveransaugung in der ersten Dosierkammer 5a durch Schliessen der Ventile 10a, 12a abgeschlossen und durch Anschliessen dieser Dosierkammer 5a an die Druckgasleitung 8a und Öffnen der Austragsleitung 6a (über das Ventil 13a) wird die Ausstossphase des Schüttgutes aus der Dosierkammer 5a eingeleitet. Dieser Schüttgutausstoss ist im Zeitpnkt t₃ abgeschlossen, in dem auch die Pulveransaugung in die zweite Dosierkammer 5b abgeschlossen ist. In diesem Zeitpunkt t₃ ist bereits auch die dritte Dosierkammer 5c evakuiert, und die Pulveransaugung in diese Dosierkammer 5c fängt an. Gleichzeitig erfolgt wiederum der Anschluss der ersten Dosierkammer 5a an die Saugleitung 7a, und es beginnt das Ausstossen des Schüttgutes aus der zweiten Dosierkammer 5b, welches im Zeitpunkt t₄ beendet ist, in dem wiederum das Ausstossen aus der dritten Dosierkammer 5c beginnt. Durch zyklische Wiederholung des vorstehend beschriebenen Ablaufes wird eine kontinuierliche Schüttgutzufuhr in einen weiteren Arbeitsprozess gewährleistet, indem pausenlos bzw. pulsfrei - in einem bestimmten Zeitinterval nacheinanderfolgend - aus der ersten, der zweiten oder der dritten Dosierkammer 5a, 5b, 5c das Schüttgut in dosierten Mengen geliefert wird.

Gemäss dem in Fig. 2 dargestellten Zeitdiagramm-Beispiel dauert vorzugsweise die Evakuierung der Dosierkammern 5a, 5b, 5c doppelt so lang wie die Pulveransaugung. Es könnte auch für die Erzeugung des Überdruckes ein längeres Zeitintervall als für den Schüttgutausstoss in Frage kommen.

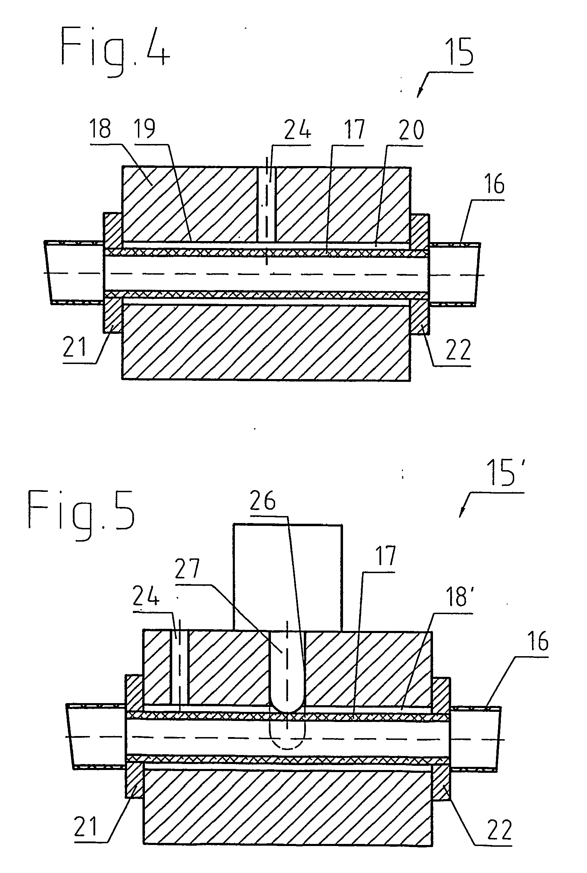

Erfindungsgemäss können nun bei gleichbleibenden Dosierkammern die Zeitintervalle für Öffnen und Schliessen der einzelnen Ventile durch die pneumatische, elektromagnetische, magnetische oder hydraulische Steuerung in ihrer Grösse wahlweise eingestellt werden, wodurch in einer bestimmten Zeit unterschiedlich grosse Schüttgutmengen in gewünschten Teildosierungen in den weiteren Arbeitsprozess zugeführt werden können. Dazu ist zu erwähnen, dass die Schaltzeiten für einen Zyklus kleiner als 1s sind, und die Entladungsfrequenz der Dosierkammern etwa 1 Hz oder mehr beträgt. Um in diesem Bereich präzise, veränderbare Schaltzeiten erreichen zu können, sind die den Schüttgutleitungen und den Gasleitungen zugeordneten, mit der pneumatischen Steuervorrichtung wirkverbundenen Ventile vorzugsweise wie in Fig. 4 oder 5 dargestellt ausgebildet.

Fig. 4 zeigt ein einer Leitung 16 zugeordnetes Ventil 15. Es kann sich dabei um jedes der vorstehend beschriebenen, entweder einer der Saug- oder Druckgasleitungen 7a, 7b, 7c oder 8a, 8b, 8c oder einer der Zufuhr- oder Austragungsleitungen 4a, 4b, 4c oder 6a, 6b, 6c zugeordneten Ventile nach Fig. 1 handeln. Die Leitung 16 weist einen im Querschnitt verformbaren Abschnitt 17 in Form eines elastisch nachgiebigen Schlauches auf, der durch einen Ventilkörper 18 bzw. eine Längsöffnung 19 desselben hirndurchragt. Die Längsöffnung 19 bildet eine den im Querschnitt verformbaren Abschnitt 17 umschließende, stirnseitig durch Dichtvorrichtungen 21, 22 abgeschlossene Druckkammer 20. Eine in die Druckkammer 20 mündende Querbobrung 24 im Ventilkörper 18 bildet den Druckanschluss an die in Fig. 4 nicht dargestellte pneumatische oder hydraulische Steuerung. Beim geöffneten Ventil 15 verhindert die Dimensionierung der Druckkammer ein Bersten des elastisch nachgiebigen Schlauches 17 und es entsteht damit eine Formstabilisierung. Durch Erzeugen eines Überdruckes in der Druckkammer 20 wird der Abschnitt 17 über einen wesentlichen Teil seiner Länge in seinem Volumen radial zusammengepresst und dadurch die Leitung 16 geschlossen. Im Gegensatz zu den bisher üblichen Vorrichtungen, wie sie beispielsweise aus der DE-A-199 59 473 bekannt sind, bei denen im Querschnitt verformbare Abschnitte der Leitungen zwischen zwei beweglichen Klemmleiste zusammengequetscht werden (d.h. einer Linien- bzw. Flächenpressung ausgesetzt werden), ist der Verschleiss der Schläuche bei den Ventilen 15 erheblich reduziert. Der Hauptvorteil besteht jedoch in der raschen Ansprechbarkeit dieser Ventile 15.

Das in Fig. 5 dargestellte Ventil 15' entspricht im wesentlichen dem Ventil 15 nach Fig. 4, wobei die gleichbleibenden Teile mit gleichen Bezugsziffern bezeichnet sind. Zudem ist eine weitere, radial in die Druckkammer 20 mündende Bohrung 26 vorhanden, in welche ein pneumatisch, magnetisch, elektromagnetisch oder elektropneumatisch betätigbarer Quetschstempel 27 als Schliessorgan verschiebbar angeordnet ist (eine das Ventil 15' verschliessende Stellung des Quetschstempels 27 ist in Fig. 5 gestrichelt angedeutet).

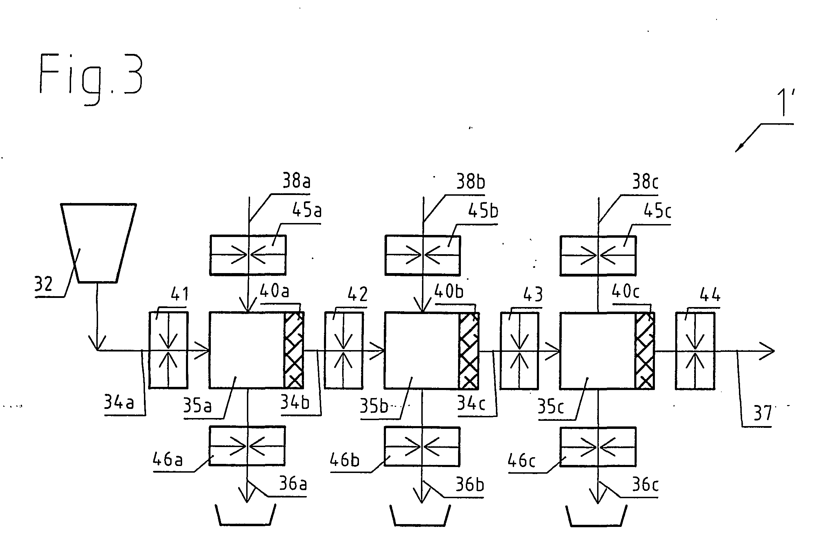

Eine weitere Vorrichtung 1' zur pneumatischen Zuführung dosierter Mengen von Schüttgut ist schematisch in Fig. 3 dargestellt. Es handelt sich um eine Sichteranlage, mittels welcher das Schüttgut aus einem Behälter 32 in unterschiedliche Grössenklassen aufgeteilt getrennt in dosierten Mengen weitergeführt wird. Die Vorrichtung 1' weist wiederum mehrere, gegebenenfalls drei Dosierkammern 35a, 35b, 35c auf, die jedoch im Unterschied zu der Vorrichtung 1 nach Fig. 1 nicht parallel, sondern in Serie geschaltet sind. Das Schüttgut wird pneumatisch über eine Zufuhrleitung 34a zu der ersten Dosierkammer 35a gefördert, die mit einem Filter 40a ausgestattet ist, mittels welchen das grobe Schüttgut zurückbehalten und lediglich Schüttgut bis zu einer bestimmten Grösse über eine Zufuhrleitung 34b zur zweiten Dosierkammer 35b weitergefördert wird. In dieser findet wiederum eine Absonderung des mittelgroben Schüttguts ab, so dass nur feines Schüttgut über eine Zufuhrleitung 34c zur dritten Dosierkammer 35c gelangt. Die dritte Dosierkammer 35c ist mit einem lediglich Gas durchlassenden Filter 40c versehen, mittels welchen auch das feinste Schüttgut abgesondert wird, und der das Eindringen des Schüttguts in eine an eine Vakuum- oder Unterdruckquelle angeschlossene Saugleitung 37 verhindert.

Die Zufuhrleitungen 34a, 34b, 34c sowie die Saugleitung 37 sind mit Ventilen 41, 42, 43, 44 versehen, über die der Anschluss der in Serie geschalteten Dosierkammern 35a, 35b, 35c an die Saugleitung 37 eingeschaltet oder ausgeschaltet wird. Jede Dosierkammer 35a, 35b, 35c ist ferner über je ein Ventil 45a, 45b, 45c an eine Druckgasleitung 38a, 38b, 38c anschliessbar und mit je einer Austragsleitung 36a, 36b, 36c für das Schüttgut ausgestattet. Die Austragsleitungen 36a, 36b, 36c sind wiederum mit Ventilen 46a, 46b, 46c versehen.

Ähnlich wie bei der Vorrichtung 1 nach Fig. 1 werden auch bei der in Fig. 3 dargestellten Vorrichtung 1' die Dosierkammern 35a, 35b, 35c gefüllt und entleert. Bei geöffneten Ventilen 41, 42, 43 und 44 wird das Schüttgut über die Zufuhrleitungen 34a, 34b, 34c in die Dosierkammern 35a, 35b, 35c angesaugt und dabei in drei Grössenklassen gesichtet. Durch Schliessen der Ventile 41, 42, 43 und 44 wird der Saugvorgang beendet, und die Dosierkammern 35a, 35b, 35c werden über die Ventile 45a, 45b, 45c an die Druclcgasleitungen 38a, 38b, 38c angeschlossen, wonach das Ausstossen des gesichteten, dosierten Schüttguts über die Austragsleitungen 36a, 36b, 36c und die geöffneten Ventile 46a, 46b, 46c erfolgt. Zur Betätigung der Ventile ist wiederum eine entsprechende Steuerung vorhanden. Die Ventile werden vorzugsweise wie in Fig. 4 oder 5 dargestellt ausgebildet.

Für eine kontinuierliche Zuführung des in drei Grössenklassen gesichteten Schüttguts (d.h. jeder Grössenklasse für sich) wäre eine parallele Anordnung von mindestens zwei solchen Dosierkammer-Reihen 35a, 35b, 35c denkbar, wobei die Betätigung der einander entsprechenden Ventile einzelner Reihen in einem Zeitintervall nacheinanderfolgen würde.

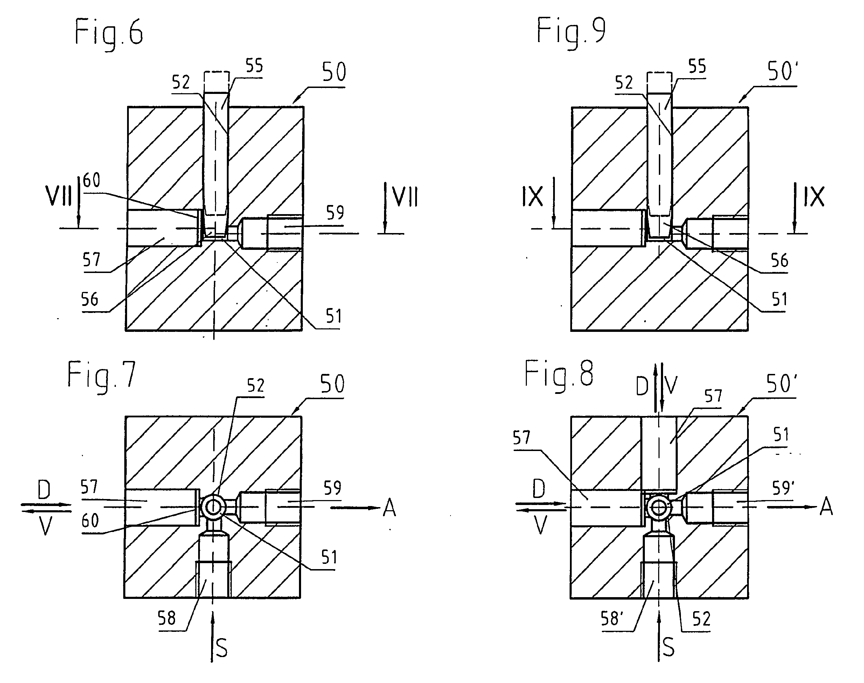

Auch bei der Vorrichtung 1' nach Fig. 3 kann zur wahlweisen Festlegung der zuzuführenden Schüttgutmenge die gewünschte Frequenz des Füllens und des Entleerens der Dosierkammern 35a, 35b, 35c eingestellt werden. Sowohl bei der Vorrichtung 1 nach Fig. 1 als auch bei derjenigen nach Fig. 3 kann erfindungsgemäss statt dieser Frequenzeinstellung - oder zusätzlich zur derselben - die gewünschte Dosiermenge auch durch Veränderung bzw. Einstellung des Dosierkanuner-Volumens bestimmt werden. Beispiele von Dosierkörpern, deren Dosierkammern in ihrem Volumen einstellbar sind, sind in Fig. 6 bis 10 dargestellt.

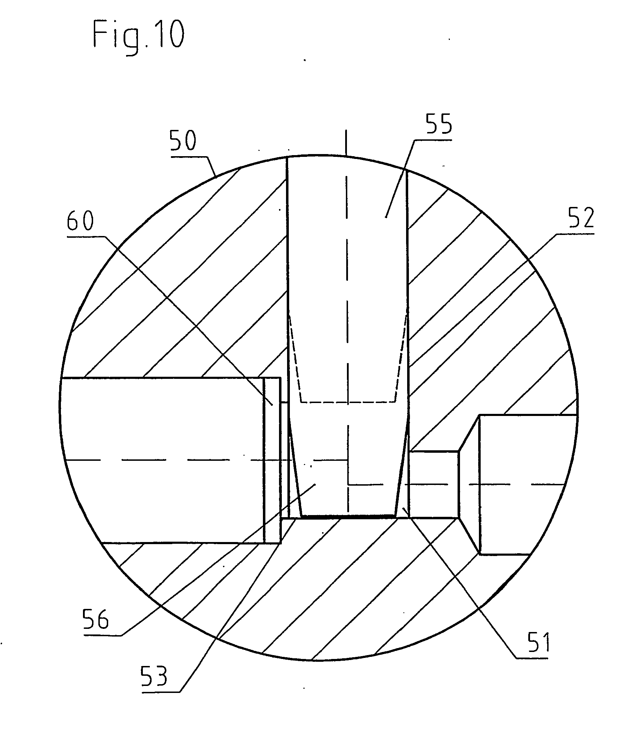

Fig. 6 und 7 zeigt einen Dosierkörper 50 mit einer Dosierkammer 51. Die Dosierkammer 51 ist durch den Umfang sowie eine untere Stirnseite 53 einer zentralen, im Querschnitt kreisförmigen Ausnehmung 52 im Dosierkörper 50 gebildet (vgl. auch Fig. 10). Von oben ist die Dosierkammer 51 durch einen in der Ausnehmung 52 dicht gleitend eingesetzten, längsverschiebbaren Dosierstempel 55 begrenzt, bzw. durch sein unteres, zylindrisches oder sich konisch verjüngendes Endstück 56. Durch Verstellen des Dosierstempels 55 (in Fig. 6 und 10 gestrichelt angedeutet) kann das Volumen der Dosierkammer 51 in seiner Grösse eingestellt werden. In die Dosierkammer 51 münden gegebenenfalls drei Anschlussbohrungen 57, 58, 59, die rechtwinklig zur Achse der Ausnehmung 52 angeordnet sind (vgl. insbesondere Fig. 7). Über die Anschlussbohrung 57 ist die Dosierkammer 51 abwechslungsweise mit einer Saug- bzw. Vakuumleitung einerseits und einer Druckgasleitung anderseits verbindbar, die hier jedoch nicht dargestellt sind. Der Vakuumanschluss ist in Fig. 7 mit einem Pfeil V, der Druclcluftanschluss mit einem Pfeil D angedeutet. Über die Anschlussbohrung 58 wird in Pfeilrichtung S das Schüttgut in die Dosierkammer 51 angesaugt, über die Anschlussbohrung 59 in Pfeilrichtung A ausgestossen. Innerhalb der Gasleitung-Anschlussbohrung 57 ist eine Filtermembrane 60 angeordnet, die - wie bereits erwähnt - das Eindringen des Schüttguts in die Gasleitungen verhindert. Das untere Endstück 56 des Dosierstempels 55 sorgt mit seiner Form dafür, dass die tangential zur Ausnehmung 52 angeordnete Filtermembrane 60 auch in der dem minimalen Dosierkammer-Volumen entsprechenden, unteren Stellung des Dosierstempels 55 mit der ganzen Fläche beaufschlagbar ist.

In Fig. 8 bis 10 ist ein Dosierkörper 50' dargestellt, der sich vom Dosierkörper 50 nach Fig. 6 und 7 durch Anzahl und Anordnung der Anschlussbohrungen für die Gas- und Schüttgutleitungen unterscheidet. Statt einer gemeinsamen Anschlussbohrung 57 sind hier zwei Anschlussbohrungen vorgesehen, um die Membranflächen noch weiter zu vergrössern. Während die Schüttgut-Ansaugung über eine in der gleichen Ebene wie die Anschlussbohrungen 57v, 57d für die Gasleitungen liegende Anschlussbohrung 58' erfolgt, ist für den Schüttgut-Ausstoss eine zur Ausnehmung 52 koaxiale, aus der Dosierkammer 51 nach unten gerichtete Anschlussbohrung 59' vorgesehen (vgl. Fig. 9).

Bei dem Schüttgut kann es sich sowohl um Pulver, feinkörnige Substrate, aber auch um Flüssigkeiten oder Flüssiglceits-Pulvergemische handeln.

Die bis heute bekannten Konzepte des Transportes pulverförmiger Schüttgüter mittels eines Transportgases basieren auf dem Prinzip der Pfropfen-oder auch Dichtstromförderung und der Flug- bzw. Schwebeförderung. Alle Verfahren erfordern, insbesondere bei langen Förderstrecken, lange Stabilisierungszeiten des Pulverstroms am Leitungsaustritt in der Start-und der Stopphase eines Transportzyklus. Die Stabilisierungs- und Stopzeit ist eine direkte Funktion der durchschnittlichen Schüttgutfördergeschwindigkeit im Transportleitungssystem und der Transportleitungslänge.

Das der vorliegenden Erfindung zugrunde gelegte Konzept basiert hingegen auf den Schüttguttransport mittels Impulsübertrag, daher im folgenden als Impulsförderung genannt. Der Schüttguttransport kommt im Falle eines Stopimpulses, unabhängig von der Transportleitungslänge, innerhalb weniger Sekunden sofort zum Erliegen bzw. es bildet sich ohne eine Stabilisierungsphase, nahezu zeitgleich mit dem Startimpuls, ein kontinuierlicher und gleichmässiger Pulverstrom am Transportleitungsaustritt aus. Dies ist insbesondere beim Einsatz in automatisierten Linien von grossem Vorteil, in denen beispielsweise kontinuierlich Produkte einem Prozess zugeführt werden und ein Transportstop des Schüttgutes im Zeitraum zwischen zwei aufeinanderfolgenden zu bearbeitenden Produkten nicht gewünscht ist. Der Einsatz der Impulsförderung in automatisierten Beschichtungslinien (bspw. in der Automobilindustrie) erlaubt daher deutlich höhere Produktivität, da unter anderem der Abstand zwischen zwei aufeinanderfolgenden Karossen entscheidend verkleinert wird.

## Patentansprüche

1. Verfahren zur Zuführung dosierter Mengen eines feinkörnigen Schüttguts in einen weiteren Arbeitsprozess, wobei das Schüttgut pneumatisch aus einem Behälter (32) über mindestens zwei wechselweise füll- und entleerbare Dosierkammern (35a, 35b, 35c; 51) gefördert und unter Druck weitergeführt wird, wobei das Füllen und Entleeren der Dosierkammern über eine Steuerung erfolgt, zur wahlweisen Festlegung der zuzuführenden Schüttgutmengen die gewünschte Frequenz des Füllens und Entleerens der Dosierkammern (35a, 35b, 35c; 51) und/oder das Volumen der vorhandenen Dosierkammern (35a, 35b, 35c; 51) in seiner Grösse eingestellt wird, wobei das Füllen der jeweiligen Dosierkammer (35a, 35b, 35c; 51) aus einer Sclaüttgut-Zufuhrlaitung (34a, 34b, 34c; 58; 58') durch einen Anschluss der Dosierkammer an eine Saug- bzw. Vakuumleitung (37; 57; 57v) erfolgt, und zum Entleeren der Dosierkammer in eine Austragsleitung (36a, 36b; 36c; 59, 59') sowie zum Weiterführen des Schüttguts die Dosierkammer an eine Druckgasleitung (38a, 38b, 38c; 57; 57d) angeschlossen wird, wobei das Einschalten und Ausschalten des Sauganschlusses sowie das Einschalten und Ausschalten des Druckgasanschlusses über pneumatisch und/oder hydraulisch gesteuerte Ventile erfolgt, **dadurch gekennzeichnet, dass**
das Schüttgut über vorzugsweise drei in Serie geschaltete Dosierkammern (35a, 35b, 35c; 51) in den weiteren Arbeitsprozess zugeführt wird, wobei aus den einzelnen Dosierkammern (35a, 35b, 35c; 51) in unterschiedliche Grössenklassen aufgeteiltes Schüttgut ausgetragen wird.

2. Verfahren nach Anspruch 1, **dadurch gekennzeichnet, dass** das Schüttgut über vorzugsweise drei parallel geschaltete Dosierkammern (5a, 5b, 5c) kontinuierlich in den weiteren Arbeitsprozess zugeführt wird, wobei die bezüglich der Funktion gleichen Ventile zum Füllen und Entleeren der einzelnen Dosierkammern (5a, 5b, 5c) in einem Zeitintervall nacheinanderfolgend betätigt werden.

3. Verfahren nach Anspruch 2, **dadurch gekennzeichnet, dass** die Schüttgut-Zuführung zu der jeweiligen Dosierkammer (5a, 5b, 5c) sowie die Sehüttgut-Austragung aus der jeweiligen Dosierkammer (5a, 5b, 5c) über je ein steuerbares Ventil (12a, 12b, 12c; 13a, 13b, 13c) erfolgt, über welches die Schüttgut-Zufuhrleitung (4a, 4b, 4c) und die Schüttgut-Austragsleitung (6a, 6b, 6c) der jeweiligen Dosierkammer (5a, 5b, 5c) geschlossen oder geöffnet gehalten werden.

4. Verfahren nach Anspruch 3, **dadurch gekennzeichnet, dass** das Einschalten des Saug- bzw. Vakuumanschlusses vor dem Öffnen der Schüttgut-Zuführleitung (4a, 4b, 4c) erfolgt.

5. Verfahren nach Anspruch 3 oder 4, **dadurch gekennzeichnet, dass** das Einschalten des Druckgasanschlusses vor dem Öffnen der Austragsleitung (6a, 6b, 6c) erfolgt.

## Claims

1. Method for conveying dosed quantities of a fine-grained bulk material to a subsequent working process, whereby the bulk material is being conveyed and further under pressure conducted pneumatically from a vessel (32) to at least two alternating refillable and dischargeable dosing chambers (35a, 35b, 35c; 51), whereby the refilling and discharging of the dosing chambers is effected by a control, for the selectively determination of the conveying quantities of the bulk material the desired frequency of the refilling and the discharging and/or the volume of the existing dosing chambers (35a, 35b, 35c; 51) is being adjusted in its size, whereby the refilling of the respective dosing chamber (35a, 35b, 35c; 51) from a bulk material supplying conduit (34a, 34b, 34c; 58; 58') is actuated by a connection of the dosing chamber to a suck- respectively vacuum conduit (37; 57; 57v), and the dosing chamber is being joined to a pressure gas conduit (38a, 38b, 38c; 57; 57d) for the discharging of the dosing chamber to a discharge conduit (36a, 36b, 36c; 59; 59') and for the further conducting of the bulk material, whereby the switching on and off of the sucking connection and the switching on and off of the pressure gas connection are being actuated by pneumatically and/or hydraulically controlled valves, **characterized in that** the bulk material is being conveyed to the subsequent working process by preferable three in series connected dosing chambers (35a, 35b, 35c; 51), whereby bulk material is being discharged from the individual dosing chambers (35a, 35b, 35c; 51) separated in different size classes,

2. Method according to claim 1, **characterized in that** the bulk material is being continuously conveyed to the subsequent working process by preferably three parallel connected dosing chambers (5a, 5b, 5c), whereby the in its function same valves being actuated in a time interval one after another for the refilling and the discharging of the individual dosing chambers (5a, 5b, 5c).

3. Method according to claim 2, **characterized in that** bulk material refilling to the respective dosing chamber (5a, 5b, 5c) and the bulk material discharging out of the respective dosing chamber (5a, 5b, 5c) is being actuated each by a controllable valve (12a, 12b, 12c; 13a, 13b, 13c), with which the bulk material refill conduit (4a, 4b, 4c) and the bulk material discharge conduit (6a, 6b, 6c) of the respective dosing chamber (5a, 5b, 5c) is being maintained closed or opened.

4. Method according to claim 3, **characterized in that** the activating of the suck- respectively the vacuum connection is being actuated before opening the bulk material refill conduit (4a, 4b, 4c).

5. Method according to claim 3 or 4, **characterized in that** the activating of the pressure gas connection is being actuated before opening the bulk material discharge conduit (6a, 6b, 6c)

## Revendications

1. Procédé d'amenée de quantités dosées d'un produit en vrac à grain fin vers un autre processus opératoire, le produit en vrac étant transporté par des moyens pneumatiques depuis un conteneur (32) par le biais d'au moins deux chambres de dosage (35a, 35b, 35c ; 51) pouvant être alternativement remplies et vidées et étant emporté sous pression, le remplissage et le vidage des chambres de dosage étant effectués par une commande, le réglage de la fréquence souhaitée du remplissage et du vidage des chambres de dosage (35a, 35b, 35c ; 51) et/ou le réglage en dimension du volume des présentes chambres de dosage (35a, 35b, 35c ; 51) étant effectués afin de déterminer sélectivement les quantités de produit en vrac à amener, le remplissage de la chambre de dosage correspondante (35a, 35b, 35c ; 51) étant effectué à partir d'une conduite d'amenée de produit en vrac (34a, 34b, 34c ; 58 : 58') en raccordant la chambre de dosage à une conduite sous vide ou d'aspiration (37, 57; 57v), et la chambre de dosage étant raccordée à une conduite de gaz sous pression (38a, 38b, 38c ; 57; 57d) pour vider la chambre de dosage dans une conduite d'évacuation (36a, 36b, 36c ; 59, 59') ainsi que pour emporter le produit en vrac, le branchement et le débranchement du raccord d'aspiration ainsi que le branchement et le débranchement du raccord de gaz sous pression étant effectués par des clapets commandés par des moyens pneumatiques et/ou hydrauliques, **caractérisé en ce que**
le produit en vrac est amené vers l'autre processus opératoire par le biais de chambres de dosage (35a, 35b, 35c ; 51) montées en série, de préférence au nombre de trois, le produit en vrac réparti en différentes granulométries étant évacué des chambres de dosage individuelles (35a, 35b, 35c ; 51).

2. Procédé selon la revendication 1, **caractérisé en ce que** le produit en vrac est amené de façon continue vers l'autre processus opératoire par le biais de chambres de dosage (5a, 5b, 5c) montées en parallèle, de préférence au nombre de trois, les clapets fonctionnellement identiques étant actionnés dans un intervalle de temps l'un après l'autre pour remplir et vider les chambres de dosage individuelles (5a, 5b, 5c).

3. Procédé selon la revendication 2, **caractérisé en ce que** l'amenée de produit en vrac à la chambre de dosage correspondante (5a, 5b, 5c) ainsi que l'évacuation du produit en vrac de la chambre de dosage correspondante (5a, 5b, 5c) sont effectuées à chaque fois par un clapet commandé (12a, 12b, 12c; 13a, 13b, 13c) permettant de maintenir ouvertes ou fermées la conduite d'amenée de produit en vrac (4a, 4b, 4c) et la conduite d'évacuation de produit en vrac (6a, 6b, 6c) des chambres de dosage correspondantes (5a, 5b, 5c).

4. Procédé selon la revendication 3, **caractérisé en ce que** le branchement du raccord sous vide ou d'aspiration est effectué avant d'ouvrir la conduite d'amenée de produit en vrac (4a, 4b, 4c).

5. Procédé selon la revendication 3 ou 4, **caractérisé en ce que** le branchement du raccord de gaz sous pression est effectué avant d'ouvrir la conduite d'évacuation (6a, 6b, 6c).
